# EUROPEAN PATENT SPECIFICATION

(11) **EP 0 480 863 B1**
(45) Date of publication and mention of the grant of the patent: **10.05.1995**
(21) Application number: 91610081.1
(22) Date of filing: 26.09.1991
(51) Int. Cl.: B65G 17/06, B65G 15/02

(54) **Chain link conveyor**
Plattenbandförderer
Transporteur à palettes

(30) Priority: 01.10.1990 US 590924
(43) Date of publication of application: 15.04.1992
(73) Proprietor: MASKINFABRIKKEN BAELTIX A/S, DK-7100 Vejle (DK)
(72) Inventor: Damkjaer, Poul Erik, DK-7100 Vejle (DK)
(74) Representative: Lund, Preben

(56) References cited:
- GB-A- 1 256 590
- GB-A- 2 037 690
- US-A- 3 442 368
- US-A- 3 512 627
- US-A- 4 241 822
- US-A- 4 958 726
- GB A 2 037 690

## Description

### Field of the invention

The invention relates to a new conveyor system in which a usually endless conveyor chain is displaced along a track. The new conveyor system may also be employed in the construction of courses consisting of several parallel tracks.

### Background of the invention

It is well known in respect of chain link conveyors that the passage of horizontal curves may cause problems as the chain is apt to rise from the outermost sliding surface of the curve. This problem has for many years been redressed by means of side cams on the chain links, which side cams interact with the underside of the sliding surface. However, this solution implies several disadvantages. The construction enhances the friction; it is only possible to remove the chain for cleaning, from for example a curve section, by separating chain links to split up the chain and pulling the chain free of the curve section; moreover, chains of this type have an outspoken tendency to produce noise and pulsations when passing curves. This technology is known from US-A-3,442,368, US-A-4,958,726 and US-A-3,512,627.

A newer method for solving the problem in connection with the passage of curves is the employment of curve sections with built-in magnets which hold down the chain links in the horizontal plane through the curves. Hereby the possibility is provided of lifting the chain free of the track, also in curves, but then a greatly enhanced friction is produced, and the curve sections become very expensive and heavy due to the powerful magnets which have to be placed in the curve sections. Furthermore, the chain either has to be produced of a magnetizable material, or has to be provided with bits of magnetizable material embedded in each individual chain link. It is therefore not possible to employ chain links consisting purely of plastic for magnet curves. As a minimum steel pins have to be employed for the coupling together of the chain links for a magnet curve to be able to hold down the chain links. Magnet curve sections are known from GB-A-2,037,690.

### Summary of the invention

The object of the invention is to present a completely new principle for automatically holding down a chain in the correct plane during the passage of curves, and by which principle the curve sections and the chain links are designed in such a way that the chain will automatically disengage when it is stopped, after which the chain may immediately be lifted free of the track or the curve section, for example for cleaning.

This is achieved by designing a chain link conveyor according to the invention as presented and characterized in claim 1. The preamble of claim 1 is based on US-A-3 442 368. Since it is a question of a completely new principle for operating conveyor chains, so called flex chains, in curves, this new principle may be employed in connection with almost any type of chain, and in complete disregard of the way in which the chain is otherwise designed, i. e. regardless of whether the top surfaces of the chain links are smooth or provided with ribs or rollers, or whether they carry friction means. Furthermore, the new principle according to the invention may be used both in connection with chain links of plastic and links of steel.

By designing the chain link conveyor according to the invention as described in the dependent claims 2-10 it is achieved, on account of the slanting surfaces and the pull in the chain, that the chain is automatically held down in the correct horizontal level, and that the chain stays in the correct level even when the chain and the curve sections have been heavily abraded after a long time of operation. When the chain is stopped it may be lifted free of the track at any place in a curve, for example for cleaning. This also applies when a number of chains operate close to each other, for example in curves of 6-8 rows, in which case it is possible to lift the chains free of the course individually and completely independent of each other, as the slanting side surfaces will shift the chain a little sideways when the chain is lifted, and disengage it from the track.

By means of the new construction a very noiseless and pulsationless operation is achieved, because the tight side of the chain will always be placed outside the centerline of the chain, and because the inner side of the downwards-extending legs or parts of the chain may be designed in such a way that it is completely out of touch with the curve section.

Based on the principles of the present invention a chain link conveyor with a curve section may also be designed with discs or curve wheels as presented and characterized in claim 11, the result being even lower friction than with conventional curve sections, especially in curves of 90° or more. The passing of the curves moreover becomes even more noiseless than with conventional curve sections. The possibilities of lifting the chain free of the track, for example for cleaning, are not limited.

By designing the curve section in the conveyor with discs as presented and characterized in claim 12, a more simple, solid, wear-resisting and dependable construction is achieved at a competitive price.

Tests of the chain link conveyor according to the invention have shown that the friction between the chain and the track is considerably lower than with the known chains. Consequently, the energy consumption may be considerably reduced.

### Brief description of the drawings

The invention will be explained in further detail in the following with reference to the drawing which shows a preferred embodiment of the invention, and in which
- fig. 1: is a cross section of a curve section of a chain link conveyor according to the invention, along the plane II - II of fig. 2,
- fig. 2: is a top view of a part of a conveyor system according to the invention,
- fig. 3A and 3B: show an example of a plastic chain link according to the invention,
- fig. 4A and 4B: show an example of a steel chain link according to the invention,
- fig. 5: shows an example of a chain link conveyor according to a second embodiment of the invention.
- fig. 6: is a curve section with discs but without a conveyor chain,
- fig. 7: is a cross section along VII-VII in fig. 6 with a conveyor chain, and
- fig. 8: is a cross section along VIII-VIII in fig. 6 with a conveyor chain.

### Detailed description of the embodiments

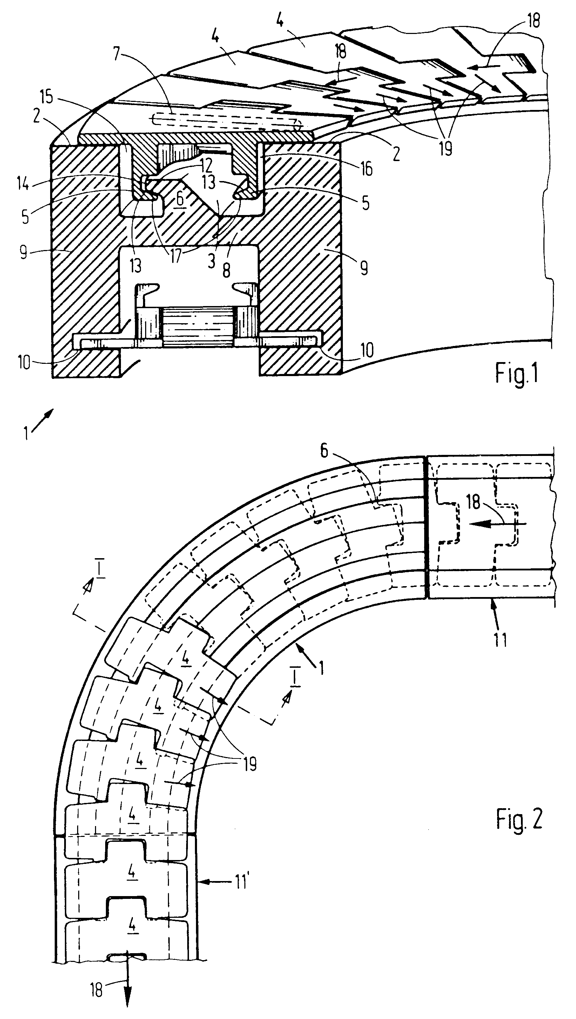

In fig. 1, which is a delineation of the principle of a chain link conveyor according to the invention, a segment of such a conveyor is shown comprising a curve section 1 and a conveyor chain 4 comprising a number of uniform chain links which are interconnected in a commonly known way.

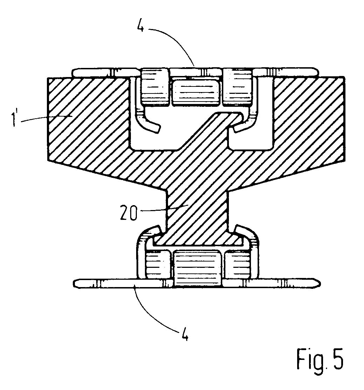

It will be obvious to an expert in the field that a number of such tracks or conveyors may be placed parallel to and close to each other, so that a wider conveyor is formed if needed. Each chain 4 is driven by an individual driving wheel (not shown), and the endless chain is returned by means of return grooves 10 at the bottom of the side pieces 9 of the track. The return part may possibly, if there is a need or demand for complete cleaning of the conveyor chain, be designed as shown in the bottom part of fig. 5, in which both the upper surface and the bottom side of the chain are accessible to cleaning.

The chain links 4 in fig. 1 may for example be interconnected by means of a link pin 7 of steel or plastic, which link pin is only sketchily indicated as such connections are generally known. The chain links are supported on sliding surfaces 2 at each side, which sliding surfaces could for example be the top surface of the track or the curve section 1. A downwards-protruding part 5 is placed below each chain link at each side, which parts extend into a lengthwise extending slot or recess 3 between the sliding surfaces 2. The track proper, which in fig. 1 is the curve section 1, furthermore comprises the two side pieces 9 which are connected by a bridge piece 8. The track or the curve section 1 is often produced integrally out of plastic, for example a low density polyethylene, by molding or machine finishing, but it may of course be produced of any suitable material with sufficient characteristics in way of strength etc. The sliding surfaces 2 may directly be the upper surfaces of the side pieces 9, but may also be mounted wear or sliding strips.

A longitudinally extending profile slide 6 is placed between the the sliding surfaces 2 and parallel to the sliding surfaces 2 and the side pieces 9, which profile 6 may be integral with the bridge piece 8 and arranged to interact with one of the downwards-protruding parts 5 at one of the sides of the chain link, as shown in the drawing. The interaction may be provided by the downwards-protruding parts 5 of the chain links 4 having a slanted downwards and inward towards the central plane extending surface 13 which corresponds to a slanting surface 12 which extends in the same direction on the longitudinally extending profile 6. Projections 17, 14 are hereby provided on the chain links 4 and the profile 6, respectively. The surfaces 12, 13 are preferably placed further outward in the curve than the central plane of the conveyor and as shown in the drawing.

When the chain is pulled in the direction of the arrow 18, a force 19 directed towards the center of the curve will be produced during the passage through a curve, as shown in figs. 1 or 2, which force will prevent the chain link from lifting from the outer sliding surface 2 of the curve, because the surfaces 12, 13 will prevent this.

A free passage 15 is provided at the outermost side and between the downwards-protruding part 5 of the chain and the outermost side piece 9 of the curve, which passage 15 is wide enough to permit the chain 4 to be lifted off the curve section 1 as soon as the chain is stopped. The slanting surfaces 12, 13 help when the chain is to be lifted, as a vertical pull on the chain will cause the chain links to be displaced outwardly and the free passage 15 to be diminished. The chain may now be freely lifted from the curve section and freely be put back in place again. As soon as the driving wheel is again started and a pull 18 is again applied to the chain, this will automatically be pulled back in place as shown in fig. 1.

The free space 16 in the opposite side prevents friction between the chain links and the side piece 9 at the inside of the curve. In case the chain links are under great load the free space 16 may be omitted, so that the load on the surfaces 12, 13 is reduced, as some of the friction and thereby some of the load is taken over by other surfaces. The life of both the chain and the curve section is hereby considerably prolonged.

Fig. 2 shows the same conveyor as fig. 1, but seen from above, and in the shape of a single track which extends from a straigth track 11 to another straight track 11' via a 90° curve section 1. The curve section 1 is provided with a longitudinally extending profile 6 which profile is not necessary in the straight tracks 11 and 11'. If the curve section 1 is to be cleaned, for example to remove the remnants of a broken bottle or the like, the conveyor chain 4 is simply stopped, the chain is lifted off the track where the need is, the track is cleaned, and the chain thereafter simply put back in place again, whereafter the conveyor may again be started. Such a cleaning operation may be executed very quickly because the chain does not have to be opened.

The embodiment of the profile 6 and the downwards-protruding parts 5 as shown in figs. 1 and 2, is only an example of how the curve sections and the chain links may be designed according to the invention. It will be obvious to an expert in the field that the same effect as explained above may be obtained by many other embodiments of the chain links and the curve sections, provided that such embodiments have parts which in the described way may interact with each other and automatically keep the chain down in the correct plane during the passage of the curves.

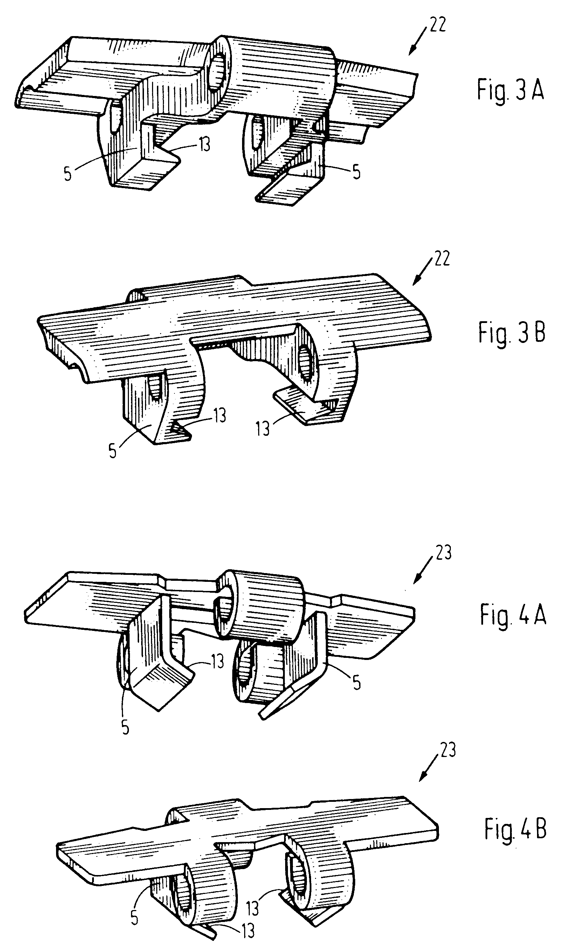

Figs. 3A and 3B show an example of a plastic chain link according to the invention, and figs. 4A and 4B show an example of a steel chain link according to the invention. Both chain links are shown with a smooth surface, but may of course be designed in any known way with ribs, rollers, friction means or the like. If only the chain links are provided with downwards-protruding parts or cams which have slanting and inward sloping sides or surfaces 13, it will be possible to use them with tracks or courses of the above mentioned kind, so that the advantages described may be obtained.

A similar chain link conveyor is shown in fig. 5, in which the curve section 1' comprises a downwards-extending inverted T-shaped part 20, on which the chain may be guided freely suspended for the return run to facilitate cleaning, sterilizing, lubrication, inspection etc. Any chain, for example of the kind shown in figs. 3 or 4, may be guided for return in this simple way, so that the desired technical advantages in respect of cleaning are obtained.

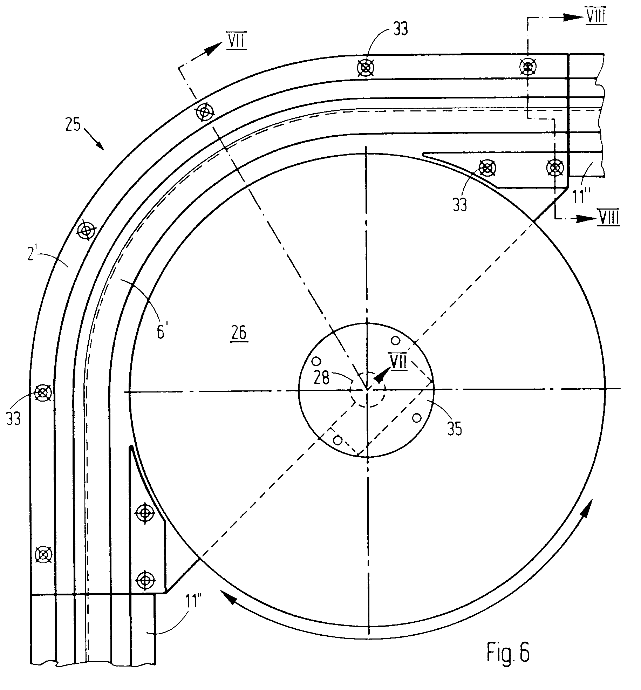

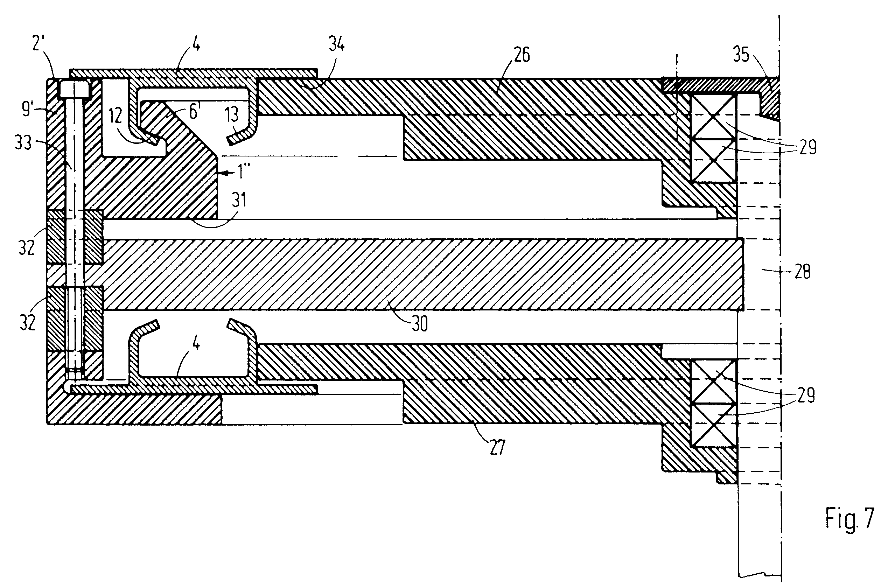

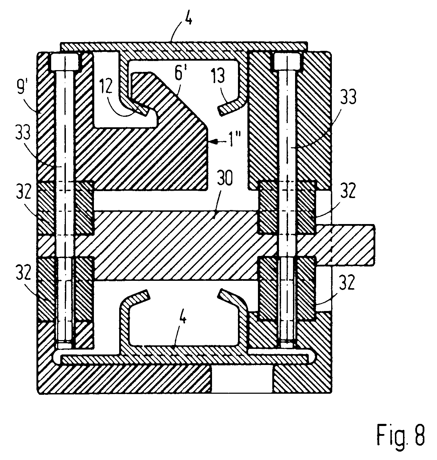

Figs. 6-8 show a curve section 25 between two conveyors extending straight ahead 11''. However, the conveyor chains 4 are only shown in figs. 7 and 8. The curve section 25 as shown is a section of 90° but may of course have any angle between 0° and 180°.

The curve section comprises two discs 26, 27 which are both mounted rotatably on a column 28 of steel or the like. The discs 26, 27 which are preferably made of synthetic material, are mounted on the column 28 by means of ball bearings 29 or the like, which at the top are covered by a cover 35. On the column is fixedly mounted a carrying means or a retainer 30 between the discs, which retainer 30 retains a section piece 1'' for the chain 4 to travel forward (the top one) and means for the chain to return (the bottom one), since the travelling forward is effected by the top disc 26 and the returning by the bottom disc 27. The parts are held together by means of bolts 33 and spacer blocks 32. The curve section 1'' has a profile 6' having a cross-sectional profile as explained before and is, as explained before, in engagement with the downwards-protruding parts of the conveyor chain 4, which parts have a slanting sliding surface 13. The profile 6' is by means of bridge parts 31 or the like cast integral with a side piece 9'. The top surface 2' of the side piece 9' is or is provided with a sliding surface for the one side of the chain 4, in that the other side abuts the top surface 34 of the rotatable disc 26.

This curve section with discs makes it possible, like with the curve section as explained and shown in figs. 1 and 2, to lift the chain 4 free of the track anywhere, for example for cleaning, inspection, repair etc., without separating the chain. When restarting, the chain 4 is automatically drawn into place for engagement with the profile 6'.

## Claims

1. A chain link conveyor with at least one curve section (1, 1') comprising a chain (4) displaced along a track including two parallel sliding rails (2, 2', 9), said chain including a plurality of interconnected adjoining chain links, each of said links including extending portions slidable along the sliding rails and downwardly projecting connecting parts (5) disposed in an area between the sliding rails (2, 2', 9), the downwardly projecting portions including oppositely disposed projection means (17),and one of said projection means (17) being engageable with a profile (6) at least in the curve section **characterized** in that said oppositely disposed projection means (17) are facing the central plane of the chain link and in that said profile (6) is provided between the sliding rails in such a manner so as to enable removal of the chain links from the rail by displacement of the chain links in a direction away from the profile (6).

2. A chain link conveyor according to claim 1, **characterized** in that the projection means (17) comprises a slanted sliding surface (13) adopted to engage with the profile (6).

3. A chain link conveyor according to claim 2, **characterized** in that the slanting sliding surface (13) is substantially planar and has a tilt downwards and inward towards the central plane of the chain link.

4. A chain link conveyor according to any one of the claims 1-3**,characterized** in that the area between the profile (6) and an outermost side piece (9) of the curve section (1, 1') is dimensioned so as to provide a free passage (15) large enough to permit the chain links to be lifted free of the curve section.

5. A chain link conveyor according to claim 1, **characterized** in that the profile (6) has a preferably through-going projection (14) on the side facing outward in the curve section (1, 1').

6. A chain link conveyor according to claim 5, **characterized** in that a longitudinally extending slanting sliding surface (12) is provided on or at the projection (14) of the profile (6).

7. A chain link conveyor according to claim 6, **characterized** in that the slanting surface (12) is substantially planar and is tilted inward towards the middle of the curve section (1, 1').

8. A chain link conveyor according to any of the claims 1-7, **characterized** in that the sliding rails (2, 2') are disposed on parallel side pieces (9) and that a bridge piece (8) is placed between and interconnecting the side pieces, which bridge piece comprises the profile (6); and wherein all members are integrally formed in one piece out of the same material, preferably synthetic material.

9. A chain link conveyor according to claim 8, **characterized** in that the side pieces (9) are extended downwards and comprise through-going parallel grooves or tracks (10) on the sides facing each other for accomodating a return run of the chain links.

10. A chain link conveyor according to claim 7, **characterized** in that the surface (12) is placed further outward in the curve section than the centerline of the chain.

11. A chain link conveyor according to claim 1 and with a curve section (25) with discs (26, 27) which are both mounted rotatably on a column (28) comprises a retainer (30) which is fixedly mounted between the discs on the column, which retainer (30) retains at least one curve piece (1'') which is a part of the chain track along the periphery of one of the discs, **characterized** in that the curve piece (1'') comprises a side piece (9'), the top surface (2') of which is the outer sliding surface for the chain (4), where one of the discs is a supporting surface (33) for the chain (4) and where along the inside of the side piece there is a profile (6') at a distance from the side piece (9') and arranged to go into engagement with downwards-protruding inward facing parts (13) on the chain links.

12. A chain link conveyor according to claim 11, **characterized** in that the curve piece (1'') comprising the profile (6') and material placed hereinbetween, for example a bridge area (31), are integrally formed in one piece of the same material, preferably synthetic material.

## Patentansprüche

1. Kettengliedförderer mit wenigstens einem Kurvenabschnitt (1, 1'), der eine Kette (4) umfaßt, die auf einer Spur verschoben wird, die zwei parallele Gleitschienen (2, 2', 9) enthält, wobei die Kette eine Vielzahl miteinander verbundener aneinandergrenzender Kettenglieder enthält, wobei jedes der Glieder verlängerte Abschnitte enthält, die auf den Gleitschienen gleiten können, sowie nach unten vorstehende Verbindungsteile (5), die in einem Bereich zwischen den Gleitschienen (2, 2', 9) angeordnet sind, wobei die nach unten vorstehenden Abschnitte einander gegenüberliegend angeordnete Vorsprungseinrichtungen (17) aufweisen, und eine der Vorsprungseinrichtungen (17) wenigstens in dem Kurvenabschnitt mit einem Profil (6) in Eingriff kommen kann, **dadurch gekennzeichnet**, daß die einander gegenüberliegend angeordneten Vorsprungseinrichtungen (17) der Mittelebene des Kettengliedes zugewandt sind, und dadurch, daß das Profil (6) zwischen den Gleitschienen so angeordnet ist, daß es die Entfernung der Kettenglieder aus der Schiene durch Verschiebung der Kettenglieder in einer Richtung von dem Profil (6) weg ermöglicht.

2. Kettengliedförderer nach Anspruch 1, **dadurch gekennzeichnet,** daß die Vorsprungseinrichtung (17) eine geneigte Gleitfläche (13) umfaßt, die mit dem Profil (6) in Eingriff kommt.

3. Kettengliedförderer nach Anspruch 2, **dadurch gekennzeichnet,** daß die geneigte Gleitfläche (13) im wesentlichen plan ist, und eine Neigung nach unten und nach innen in Richtung der Mittelebene des Kettengliedes aufweist.

4. Kettengliedförderer nach einem der Ansprüche 1-3, **dadurch gekennzeichnet**, daß der Bereich zwischen dem Profil (6) und einem äußersten Seitenteil (9) des Kurvenabschnitts (1, 1') so bemessen ist, daß er einen freien Durchlaß (15) bildet, der groß genug ist, um das ungehinderte Abheben der Kettenglieder von dem Kurvenabschnitt zu ermöglichen.

5. Kettengliedförderer nach Anspruch 1, **dadurch gekennzeichnet,** daß das Profil (6) einen vorzugsweise durchgehenden Vorsprung (14) an der in dem Kurvenabschnitt (1, 1') nach außen gerichteten Seite hat.

6. Kettengliedförderer nach Anspruch 5, **dadurch gekennzeichnet,** daß eine in Längsrichtung verlaufende geneigte Gleitfläche (12) auf oder an dem Vorsprung (14) des Profils (6) vorhanden ist.

7. Kettengliedförderer nach Anspruch 6, **dadurch gekennzeichnet,** daß die geneigte Fläche (12) im wesentlichen plan ist und nach innen in Richtung der Mitte des Kurvenabschnitts (1, 1') geneigt ist.

8. Kettengliedförderer nach einem der Ansprüche 1-7, **dadurch gekennzeichnet,** daß die Gleitschienen (2, 2') an parallelen Seitenteilen (9) angeordnet sind, und daß ein Brückenteil (8) zwischen den Seitenteilen angeordnet ist und sie miteinander verbindet, wobei das Brückenteil das Profil (6) umfaßt; und wobei alle Teile aus einem Stück aus dem gleichen Material, vorzugsweise Kunststoffmaterial, bestehen.

9. Kettengliedförderer nach Anspruch 8, **dadurch gekennzeichnet,** daß die Seitenteile (9) nach unten verlängert sind und durchgehende parallele Nuten bzw. Bahnen (10) an den einander zugewandten Seiten umfassen, die einen Rückkehrstrang der Kettenglieder aufnehmen.

10. Kettengliedförderer nach Anspruch 7**, dadurch gekennzeichnet,** daß die Fläche (12) weiter außen in dem Kurvenabschnitt als die Mittellinie der Kette angeordnet ist.

11. Kettengliedförderer nach Anspruch 1 mit einem Kurvenabschnitt (25) mit Scheiben (26, 27), die beide drehbar an einer Säule (28) angebracht sind, die eine Halteeinrichtung (30) umfaßt, die fest zwischen den Scheiben an der Säule angebracht ist, wobei die Halteeinrichtung wenigstens ein Kurventeil (1'') hält, das ein Teil der Kettenbahn am Umfang einer der Scheiben ist, **dadurch gekennzeichnet,** daß das Kurventeil (1'') ein Seitenteil (9') umfaßt, dessen Oberseite (2') die äußere Gleitfläche für die Kette (4) bildet, wobei eine der Scheiben eine Auflagefläche (33) für die Kette (4) bildet, und wobei entlang der Innenseite des Seitenteils ein Profil (6') in einem Abstand zu dem Seitenteil (9') vorhanden ist, das mit nach unten vorstehenden, nach innen gerichteten Teilen (13) an den Kettengliedern in Eingriff kommt.

12. Kettengliedförderer nach Anspruch 11, **dadurch gekennzeichnet,** daß das Kurventeil (1''), das-das Profil (6') umfaßt, und dazwischen befindliches Material, beispielsweise ein Brückenbereich (31), aus einem Stück aus dem selben Material, vorzugsweise Kunststoffmaterial, bestehen.

## Revendications

1. Transporteur à maillons en chaîne ayant au moins un tronçon courbe (1, 1') comprenant une chaîne (4) déplacée le long d'un chemin comprenant deux rails parallèles (2, 2', 9) de glissement, ladite chaîne comprenant plusieurs maillons de chaîne contigus et reliés entre eux, chacun desdits maillons comprenant des Parties allongées Pouvant glisser le long des rails de glissement et des parties (5) de liaison faisant saillie vers le bas et disposées dans une zone entre les rails (2, 2', 9) de glissement, les parties faisant saillie vers le bas comprenant des moyens opposés (17) en saillie et l'un desdits moyens (17) en saillie pouvant être engagé avec un profil (6) au moins dans le tronçon courbe, caractérisé en ce que lesdits moyens opposés (17) en saillie font face au plan central du maillon de chaîne et en ce que ledit profil (6) est prévu entre les rails de glissement de manière à permettre aux maillons de chaîne d'être enlevés du rail par déPlacement des maillons de chaîne dans un sens s'éloignant du profil (6).

2. Transporteur à maillons de chaîne selon la revendication 1, caractérisé en ce que les moyens (17) en saillie présentent une surface inclinée (13) de glissement conçue pour être en contact avec le profil (6)

3. Transporteur à maillons de chaîne selon la revendication 2, caractérisé en ce que la surface inclinée (13) de glissement est sensiblement plane et présente une inclinaison vers le bas et vers l'intérieur en direction du plan central du maillon de chaîne.

4. Transporteur à maillons de chaîne selon l'une quelconque des revendications 1-3, caractérisé en ce que la zone comprise entre le profil (6) et une pièce latérale (9) située le plus à l'extérieur du tronçon courbe (1, 1') est dimensionnée de façon à établir un passage libre (15) suffisamment grand pour permettre aux maillons de chaîne d'être soulevés librement du tronçon courbe.

5. Transporteur à maillons de chaîne selon la revendication 1, caractérisé en ce que le profil (6) présente une saillie (14) avantageusement transversale sur le côté tourné vers l'extérieur dans le tronçon courbe (1, 1').

6. Transporteur à maillons de chaîne selon la revendication 5, caractérisé en ce qu'une surface inclinée (12) de glissement, s'étendant longitudinalement, est prévue sur ou à la saillie (14) du profil (6).

7. Transporteur à maillons de chaîne selon la revendication 6, caractérisé en ce que la surface inclinée (12) est sensiblement plane et est inclinée vers l'intérieur en direction du milieu du tronçon courbe (1, 1').

8. Transporteur à maillons de chaîne selon l'une quelconque des revendications 1-7, caractérisé en ce que les rails (2, 2') de glissement sont disposés sur des pièces latérales parallèles (9) et en ce qu'une pièce (8) de pontage est placée entre les pièces latérales qu'elle relie, laquelle pièce de pontage comporte le profil (6) ; et dans lequel tous les éléments sont formés intégralement d'une seule pièce de la même matière, avantageusement une matière synthétique.

9. Transporteur à maillons de chaîne selon la revendication 8, caractérisé en ce que les pièces latérales (9) sont prolongées vers le bas et présentent des gorges ou chemins parallèles transversaux (10) sur les côtés tournés face à face pour recevoir un brin de retour des maillons de chaîne.

10. Transporteur à maillons de chaîne selon la revendication 7, caractérisé en ce que la surface (12) est placée davantage à l'extérieur, dans le tronçon de courbe, que l'axe central de la chaîne.

11. Transporteur à maillons de chaîne selon la revendication 1 et ayant un tronçon de courbe (25) avec des disques (26, 27) qui sont montés tous deux de façon à pouvoir tourner sur une colonne (28) , comportant un élément de retenue (30) qui est monté fixement entre les disques sur la colonne, lequel élément de retenue (30) retient au moins une pièce courbe (1'') qui constitue une partie du chemin de chaîne le long de la périphérie de l'un des disques, caractérisé en ce que la pièce courbe (1'') comprend une pièce latérale (9') dont la surface supérieure (2') est la surface extérieure de glissement pour la chaîne (4) où l'un des disques constitue une surface (33) de support pour la chaîne (4) et où un profil (6') est situé le long du côté intérieur de la pièce latérale, à une certaine distance de la pièce latérale (9') et dans un agencement lui permettant de venir en contact avec des parties (13), tournées vers l'intérieur et faisant saillie vers le bas, sur les maillons (11) de chaîne.

12. Transporteur à maillons de chaîne selon la revendication 11, caractérisé en ce que la pièce courbe (1'') comprenant le profil (6') et de la matière placée entre eux, par exemple une zone de pontage (31), sont formés intégralement d'une seule pièce de la même matière, avantageusement une matière synthétique.
